# EUROPÄISCHE PATENTSCHRIFT

(11) **EP 3 628 862 B1**
(45) Veröffentlichungstag und Bekanntmachung des Hinweises auf die Patenterteilung: **19.06.2024**
(21) Anmeldenummer: 19200035.4
(22) Anmeldetag: 27.09.2019
(51) Int. Cl.: F03D 17/00, F03D 80/50, G05B 23/02, G05B 19/042

(54) **VERFAHREN ZUM STEUERN VON STÖRUNGSBEHEBUNGEN BEI WINDENERGIEANLAGEN SOWIE ENTSPRECHENDES SYSTEM**
METHOD FOR CONTROLLING MALFUNCTIONS IN WIND ENERGY INSTALLATIONS AND CORRESPONDING SYSTEM
PROCÉDÉ DE COMMANDE DES DÉPANNAGES DANS DES ÉOLIENNES AINSI QUE SYSTÈME CORRESPONDANT

(30) Priorität: 28.09.2018 DE 102018007690
(43) Veröffentlichungstag der Anmeldung: 01.04.2020
(73) Patentinhaber: Siemens Gamesa Renewable Energy Service GmbH, 20097 Hamburg (DE)
(72) Erfinder: Pleißner, Matthias, 21521 Dassendorf (DE)
(74) Vertreter: Glawe, Delfs, Moll

(56) Entgegenhaltungen:
- WO-A1-2014/114296
- WO-A1-2014/124680
- CN-Y- 201 402 209
- DE-A1-102011 000 823

## Beschreibung

Die Erfindung betrifft ein Verfahren zum Steuern von Fehlerbehebungen an Windenergieanlagen, die jeweils einen von einem Windrotor angetriebenen Generator zur Erzeugung elektrischer Leistung sowie eine Betriebssteuerung aufweisen, unter Verwendung eines mobilen Endgeräts zum Einsatz an einer von einem Fehler betroffenen Windenergieanlage. Die Erfindung betrifft ferner ein entsprechendes Computerprogrammprodukt sowie Wartungssystem.

Hohe Zuverlässigkeit und effizienter Betrieb von Windenergieanlagen sind wesentliche Komponenten für die Schaffung und Aufrechterhaltung von stabilen und leistungsfähigen Stromnetzen. Dies gilt umso mehr deshalb, da der Anteil von regenerativ erzeugter Energie, insbesondere durch Windenergie, stetig zunimmt. Moderne Windenergieanlagen sind komplexe technische Einrichtungen, die regelmäßiger technischer Betreuung bedürfen. Dies gilt sowohl für einzelne Windenergieanlagen wie auch Windparks als Ganzes mit den darin enthaltenen Windenergieanlagen. Da Windenergieanlagen häufig an eher abseits gelegenen Orten angeordnet werden, ist der Zugang zu ihnen mitunter aufwendig. Dies gilt insbesondere dann, wenn die Windenergieanlagen nicht an Land, sondern offshore aufgestellt sind. Ein spontaner Zugang zu den Windenergieanlagen ist häufig nicht oder nur unter erschwerten Umständen möglich. Das bedeutet, dass zur Gewährleistung einer hohen technischen Betriebsbereitschaft Fehler und Störungen rasch und effizient zu beheben sind.

Üblicherweise kommt ein Techniker vor Ort zu der von einem Fehler bzw. einer Störung betroffenen Windenergieanlage. Er erfasst Fehlermeldungen der Windenergieanlage (insbesondere von deren Steuerung) und er erfasst auch den Status der Windenergieanlage, insbesondere dahingehend, was an Komponenten dort verbaut ist, in welchem Baustand usw. All dies geschieht weitgehend händisch durch Ausfüllen von Formularen, gegebenenfalls auf Papier oder am Rechner. Wegen der Vielzahl der Windenergieanlagen und ihrer Verschiedenheit ist hier eine Standardisierung kaum durchführbar. Insgesamt ist das Verfahren damit ausgesprochen aufwändig. Besonders die Verschiedenheit der Komponenten bringt es mit sich, dass eine mögliche Fehlererkennung bzw. Fehlerbehebung, die bei einer Windenergieanlage gut funktioniert, bei einer anderen Windenergieanlage mit einer anderen Komponente nicht funktioniert oder sogar kontraproduktiv sein kann. Um dadurch entstehende Gefährdungen für die Betriebssicherheit der Windenergieanlagen auszuschließen, muss mit großer Sorgfalt vorgegangen werden. Diese Art des Vorgehens ist nicht nur fehleranfällig, sondern bringt auch zusätzlichen Aufwand und damit verlängerte Fehlerbehebungszeiten mit sich.

Es sind zwar Verfahren zur Ferndiagnostik bei Fehlern von Windenergieanlagen bekannt (WO 02/079646 A1). Vorgesehen ist eine Kamera sowie ein Mikrofon in der Gondel einer Windenergieanlage, die bei Fehlern auf die betroffene Komponente ausgerichtet werden können und entsprechende Bild- sowie Toninformation an eine entfernt gelegene Betriebszentrale übermitteln. Diese kann dann je nachdem, was sie sieht bzw. hört, entsprechend reagieren und die Windenergieanlage stillsetzen oder einen Techniker zu der Windenergieanlage schicken. Dem Techniker vor Ort wird bei der Arbeit an der Fehlerbehebung jedoch keine weitere Unterstützung geboten.

Das Dokument WO 2014/124680 A1 betrifft die Erzeugung und das Berichten eines Datenreports hinsichtlich des Zustands von Komponenten einer Windenergieanlage. Dabei sollen Beobachtungen von Technikern bei regulären Inspektionen auf digitalem Weg unter anderem mittels eines portablen Geräts erfolgen.

Aus dem Dokument DE 10 2011 000 823 A1 ist die Erstellung einer Wartungsdatenbank zum Abspeichern von Dokumentationsdaten von Windenergieanlagen bekannt, wobei die Daten an eine externe Station zwecks Auswertung übertragen werden können.

Der Erfindung liegt die Aufgabe zugrunde, eine schnellere und effizientere Fehlerbehebung ermöglichen, und zwar insbesondere für den Techniker vor Ort.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Steuern von Fehlerbehebungen an Windenergieanlagen, die jeweils einen von einem Windrotor angetriebenen Generator zur Erzeugung elektrischer Leistung sowie eine Betriebssteuerung aufweisen, unter Verwendung eines mobilen Endgeräts zum Einsatz an einer von einem Fehler betroffenen Windenergieanlage, ist gemäß der Erfindung vorgesehen ein Erfassen eines Fehlers an der Windenergieanlage durch einen Nutzer mittels des mobilen Endgeräts, Identifizieren der Windenergieanlage und/oder ihrer Komponenten, Aufbauen einer Verbindung zu einem entfernten, zentralen Datenbanksystem, in dem Angaben zur Identifikation der Windenergieanlage, Komponenten und Ausrüstungsstand der Windenergieanlage enthalten sind, Abfragen von Komponenten und/oder Ausrüstungsstand-Daten in Bezug auf die fehlerbehaftete Windenergieanlage (von dem zentralen Datenbanksystem) und Übermitteln dieser an das mobile Endgerät, Generieren eines Fehlerreports, wobei in den Report automatisiert die abgefragten Daten zur Identifikation sowie Komponenten und/oder Ausrüstungsstand aufgenommen sind, und Automatisiertes Ermitteln von Maßnahmen zur Behebung des Fehlers, umfassend: Aufbauen einer Verbindung zu dem entfernten zentralen Datenbanksystem, in dem Angaben zu Maßnahmen bei Fehlern gespeichert sind, automatisiertes Auswählen der Maßnahmen, die in diesem Datenbanksystem gespeichert sind in Bezug auf die identifizierte Windenergieanlage und/oder ihre Komponenten, und Übermitteln mindestens einer der Maßnahmen an das mobile Endgerät.

Vorzugsweise erfolgt ferner eine Zuordnung zu bereits bekannten Fehlerbildern im System zu dem jeweiligen Material, wodurch eine automatische Clusterung und Klassifizierung erreicht wird. Passende Fehlerbehebungsmaßnahmen werden direkt dem Nutzer am mobilen Endgerät zur Verfügung gestellt.

Zuerst seien einige verwendete Begriffe erläutert:
Unter einem Fehler wird ganz allgemein jede Art von Fehler, Störung oder andere Fehlfunktion an der Windenergieanlage verstanden, die in irgendeiner Weise für den Betrieb einschließlich Hochfahren und Stillsetzen der Windenergieanlage von Bedeutung sind. Der Begriff bezieht sich nicht nur auf schwerwiegende Fehler oder Störungen, sondern im Grunde auf jede Art von Abweichung von dem eigentlichen Sollzustand, allgemein gesprochen also auf an sich beliebige Nicht-Übereinstimmungen (auch als "non-conformity" bekannt).

Unter einem mobilen Endgerät wird ein tragbarer Computer, insbesondere Kleincomputer, verstanden, der über eine Benutzerschnittstelle sowie über eine (in der Regel drahtlose) Netzwerkanbindung verfügt, beispielsweise über das Mobilfunknetz an das Internet. Beispiele für ein solches mobiles Endgerät sind vorzugsweise ein Smartphone oder ein internetfähiges sog. Tablet, aber auch ein Laptop-Computer.

Unter einer Maßnahme wird ein Schritt zur Behebung eines Fehlers verstanden. Dieser Schritt kann liegen in einer diagnostischen Tätigkeit zum Erkennen des Fehlers oder in einer korrigierenden Tätigkeit zur eigentlichen Behebung des Fehlers, vorzugsweise aus beidem.

Unter einem zentralen Datenbanksystem wird ein zentrales Speicher- und/oder Abfragesystem verstanden, das eine geeignete Architektur aufweist. Dabei umfasst das Datenbanksystem mindestens eine Datenbank, kann aber auch aus mehr als einer Datenbank gebildet sein, wobei die mehreren Datenbanken zur Bildung des Datenbanksystems in zweckdienlicher Weise miteinander verknüpft sind.

Die Erfindung beruht auf dem Gedanken, bei der Bearbeitung des Fehlers vor Ort, also an der Windenergieanlage, bekannte Information zu dieser Windenergieanlage, insbesondere zu ihrem Typ, verbauten Komponenten und deren Baustand, aus einem entsprechenden Datenbanksystem abzurufen. Auf diese Weise kann auf diese für die Behandlung des Fehlers vitale Informationen sofort und sicher zugegriffen werden, ohne dass sie dazu umständlich und gegebenenfalls fehleranfällig von dem Techniker vor Ort manuell zu erfassen sind. Lästiges und fehleranfälliges Ausfüllen von Formularen, sei es auf Papier oder in einer Eingabemaske eines entsprechenden Dokumentationsprogramms, entfällt damit. Im Grunde ohnehin vorhandene Information, nämlich in einer Datenbank des Herstellers bzw. Betreibers über die Windenergieanlage und darin verbaute Komponenten, werden auf diese Weise für die Fehlerbehebung nutzbar gemacht. Das Zusteuern dieser Informationen aus dem in der Regel ohnehin vorhandenen Datenbanksystem spart Zeit bei der Bearbeitung und erhöht die Genauigkeit und Richtigkeit, da fehlerhafte manuelle Eingaben in Bezug auf Komponenten der Windenergieanlage und/oder deren Baustand keine Rolle mehr spielen. Somit können viel präzisere Fehlerreports kreiert werden, und zwar auf wesentlich weniger aufwändige Weise und mit stark verringerter Fehleranfälligkeit. Da ein korrekter Fehlerreport die Grundlage jeder Fehlerbehebung ist, wird somit ein entscheidender Fortschritt in Bezug auf effizientere Behebung des Fehlers und damit insgesamt effektivere Fehlerbehebung erreicht.

Zweckmäßigerweise wird hierbei als mobiles Endgerät ein Smartphone oder ein Tabletcomputer verwendet, wobei vorzugsweise das Aufbauen der Verbindung zum entfernten Datenbanksystem, das Abfragen von Komponenten und/oder Ausrüstungsstand und das Generieren des Fehlerreports mittels einer Softwareanwendung ("App") automatisiert sind. Mittels eines solchen Geräts und einer solchen App kann somit eine vollständige digitale Erfassung der Fehler erfolgen. Es erfolgt gemäß einem besonders vorteilhaften Merkmal der Erfindung eine direkte Erfassung innerhalb des Datenbanksystems zur weiteren Bearbeitung. Medienbrüche können dadurch vermieden werden, und überdies wird durch das Zusteuern der erforderlichen Informationen, wie vorstehend erläutert, eine deutliche Verbesserung in Bezug auf die inhaltliche Richtigkeit der Fehlerreports erreicht. Überdies geht es auch schneller. Das ist gerade in der täglichen Praxis, wo es auf Schnelligkeit der Reaktion zur Vermeidung von unnötigen Stillstandzeiten der Anlage ankommt, ein erheblicher Vorteil. Dies gilt umso mehr auch deshalb, da in größeren Windparks häufig mehr als eine Windenergieanlage von einem Fehler betroffen ist, so dass der Techniker als Nutzer dann schneller zur nächsten Windenergieanlage gelangen kann und die Zahl betriebsbereiter bzw. aktiv energieerzeugender Windenergieanlagen sich so erhöht. Insgesamt steigt somit durch die Erfindung die Verfügbarkeit der Windenergieanlagen wie auch die tatsächlich erzeugte Gesamtleistung eines Windparks.

Gemäß der Erfindung ist ferner ein automatisiertes Ermitteln von Maßnahmen zur Behebung des Fehlers vorgesehen. Dazu umfasst das automatisierte Ermitteln ein Aufbauen einer Verbindung zu dem entfernten zentralen Datenbanksystem, in dem Angaben zu Maßnahmen bei Fehlern gespeichert sind, ein automatisiertes Auswählen der Maßnahmen, die in diesem Datenbanksystem in Bezug auf die identifizierte Windenergieanlage und/oder ihre Komponenten gespeichert sind, und ein Übermitteln mindestens einer der Maßnahmen an das mobile Endgerät. Dem Nutzer werden damit, in Abhängigkeit von den verbauten Komponenten bzw. Baustand der von dem Fehler betroffenen Windenergieanlagen, passende Maßnahmen zur Behebung des Fehlers vorgelegt. Der Techniker als Nutzer wird somit anhand vordefinierter Maßnahmen durch die Fehlerbehebung geführt. Damit kann eine beträchtliche Standardisierung in Bezug auf die Behandlung von Fehlern erreicht werden, was im Ergebnis zu einer reproduzierbaren und zuverlässigeren Fehlerbehebung führt.

Darüber hinaus eröffnet die Erfindung auch den Weg zu einer breiteren Palette an Maßnahmen zur Fehlerbehebung. So sieht das Übermitteln der Maßnahme zweckmäßigerweise das Übermitteln von Multimediainhalten, insbesondere Bildern, Fehlerbildern und/oder akustischen Signaturen und deren Wiedergabe auf dem mobilen Endgerät vor, und zwar abgestimmt auf die identifizierte Windenergieanlage und/oder ihre Komponenten. Es werden dem Nutzer somit auf Typ und den Baustand der Windenergieanlage abgestimmte maßgeschneiderte Bilder und/oder andere multimediale Inhalte in Bezug auf die von dem Fehler betroffene Windenergieanlage geboten. Damit kann die Fehlersuche und -erkennung deutlich vereinfacht werden. Für die Nutzer stellt dies eine erhebliche Vereinfachung dar. Dank der Erfindung wird aber auch sichergestellt, dass stets nur passende Bilder bzw. akustische Signaturen geliefert werden, die genau zu der betroffenen Windenergieanlage passen. Im Ergebnis stößt die Erfindung damit die Tür auf zu einer ganz neuen Art der Fehlererkennung und Behebung.

Hierbei ist das Übermitteln der mindestens einen Maßnahme nicht beschränkt auf diagnostische Tätigkeiten. Zweckmäßigerweise umfasst das Übermitteln ferner Sofortmaßnahmen, die an der Windenergieanlage zu treffen sind. Mit diesen Sofortmaßnahmen kann nicht nur die Diagnostik bzw. Behebung der Fehler verbessert werden, sondern es kann auch erreicht werden, dass gegebenenfalls für die Betriebssicherheit kritische Zustände und Gefahren mittels der Sofortmaßnahmen erkannt und ausgeschaltet werden. Dies ist ermöglicht dank der erfindungsgemäß auf genau die Windenergieanlagen und ihre Komponenten bzw. deren Baustand zugeschnittenen Information, die von dem Datenbanksystem zugesteuert wird. Es kann somit maßgeschneidert nicht nur auf die Störung reagiert werden, sondern auch in Bezug auf die speziellen Gegebenheiten der konkret betroffenen Windenergieanlage. Die Maßnahme erfolgt somit punktgenau bezogen auf die jeweilige individuelle Windenergieanlage.

In vielen Fällen kann es so sein, dass je nach dem beobachteten Fehler nicht nur eine Maßnahme erforderlich ist, sondern mehrere verschiedene Maßnahmen in Betracht kommen können. Um auch in solchen a priori nicht eindeutigen Fällen effizient reagieren zu können, werden zweckmäßigerweise mehrere Maßnahmen an das mobile Endgerät übermittelt. Daraus wählt dann der Nutzer am mobilen Endgerät eine aus. Diese Maßnahme wird dann angewendet. Die Auswahl der Maßnahme wird an das zentrale Datenbanksystem übermittelt und dort zu der jeweiligen Windenergieanlage gespeichert. Somit ist für zukünftige Aktionen (insbesondere weitere Fehlerbehebungen) bekannt, dass genau diese Maßnahme ausgewählt wurde.

Zweckmäßigerweise wird bei dem Generieren des Fehlerreports auch eine Angabe automatisiert aufgenommen, welche Maßnahme ausgeführt wurde. Für eine eventuelle zukünftige Behandlung des gleichen oder eines ähnlichen Fehlers kann dieses (in dem Datenbanksystem eingespeicherte) Wissen von großer Bedeutung sein.

Es ist von Vorteil, wenn nicht nur das Anwenden der Maßnahme bei der Windenergieanlage erfasst wird, sondern auch das Ergebnis erfasst und mittels des mobilen Endgeräts übermittelt wird. Auf diese Weise kann auch das Ergebnis der Maßnahme in dem zentralen Datenbanksystem eingespeichert werden, zur gegebenenfalls zukünftigen Verwendung bei dem Auftreten desselben oder eines ähnlichen Fehlers.

Mit Vorteil ist vorgesehen, dass das Übermitteln der Daten von dem zentralen Datenbanksystem an das mobile Endgerät fliegend erfolgt. Unter "fliegend" wird hierbei verstanden, dass die Übermittlung ohne Anlegen von kopierten Datensätzen erfolgt, sondern es wird direkt auf die entsprechenden gespeicherten Daten in dem zentralen Datenbanksystem zugegriffen. Das Anlegen lokaler Kopien, auf die dann zugegriffen würde, wird damit ausdrücklich vermieden. Das erfindungsgemäße Verfahren bleibt damit in sich geschlossen. Entsprechendes gilt für ein automatisiertes Abspeichern des Fehlerreports in dem zentralen Datenbanksystem. Es soll aber alternativ nicht ausgeschlossen sein, dass das Aufbauen der Verbindung zu dem entfernten zentralen Datenbanksystem zu einem anderen Zeitpunkt erfolgt und eine Synchronisierung der Daten auf dem Endgerät und dem zentralen Datenbanksystem umfasst. Damit kann vorzugsweise eine Offline-Funktionalität bereitgestellt werden. Hierbei werden die Daten zwischen dem Endgerät und dem Datenbanksystem vor bzw. nach dem Einsatz an der jeweiligen Windenergieanlage synchronisiert; der Einsatz selbst an der Windenergieanlage kann dann auch offline erfolgen, so dass eine stabile Netzabdeckung für einen Datennetzzugang am Ort der Windenergieanlage nicht erforderlich ist. Das Einsatzspektrum der Erfindung erweitert sich damit erheblich, insbesondere auch in Bezug auf Offshore-Standorte.

Vorzugsweise ist weiter vorgesehen ein automatisiertes Bilden und Aktualisieren eines Bearbeitungszustands des Fehlers. Gerade bei Fehlern, die nicht einfach ad hoc behoben werden können, ist es zweckmäßig, einen Bearbeitungszustand der Fehler zu dokumentieren und zu pflegen. Zieht sich die Behebung eines Fehlers über einen gewissen Zeitraum hin, beispielsweise weil Ersatzteile erst beschafft und transportiert werden müssen, so ist es für eventuelle andere an derselben Windenergieanlage arbeitende Techniker von Vorteil, Kenntnis von dem bereits bekannten und auf vollständige Behebung wartenden Fehler zu haben. Aber auch aus Qualitätssicherungsgründen ist es von Vorteil, Information über dem Bearbeitungszustand eines Fehlers zu haben. Indem erfindungsgemäß der Bearbeitungszustand automatisch gebildet und aktualisiert wird, ist insoweit sichergestellt, dass Informationen zum Bearbeitungszustand aktuell und akkurat sind.

Mit Vorteil ist hierbei ein automatisiertes Anzeigen des Bearbeitungszustands an dem mobilen Endgerät vorgesehen, vorzugsweise einschließlich Anzeigen von Indikatoren für die Identität des Nutzers, der den Fehler zuerst übermittelt hat, welche Maßnahmen bereits erfolgt sind und/oder welche weiteren Fehler zu der identifizierten Windenergieanlage gespeichert sind. Somit sind eventuelle andere, an derselben Windenergieanlage arbeitende Techniker ohne weiteres Zutun über die anderen Fehlervorgänge an dieser Windenergieanlage im Bild.

Es ist zweckmäßig, zusätzlich ein automatisiertes Ausführen eines vorzugsweise vordefinierten Workflows zur Behebung des Fehlers vorzusehen. Viele Fehler erfordern aufgrund ihrer nicht nur ganz geringen Komplexität einen Workflow zur Behebung. Das Einhalten standardisierter Workflows ist günstig für das Erreichen einer hohen Betriebsbereitschaft und Zuverlässigkeit der Windenergieanlage. Mit Vorteil weist die Erfindung einen Workflow-Generator auf, der bei dem Erkennen eines Fehlers automatisiert einen entsprechenden Workflow zur Behebung bildet. Damit kann zuverlässig eine hohe Reproduzierbarkeit bei der Behebung des Fehlers erreicht werden.

Die Erfindung erstreckt sich ferner auf ein Computerprogrammprodukt, umfassend Befehle, die bei der Ausführung des Programms durch einen Computer diesen veranlassen, das Verfahren nach Anspruch 1 auszuführen. Außerdem erstreckt sich die Entfernung auf ein entsprechendes Fehlerbehandlungssystem gemäß dem unabhängigen Vorrichtungsanspruch. Zur näheren Erläuterung wird auf vorstehende Beschreibung verwiesen.

Die Erfindung wird nachfolgend unter Bezugnahme auf die beigefügte Zeichnung näher anhand eines Ausführungsbeispiels erläutert. Es zeigen:

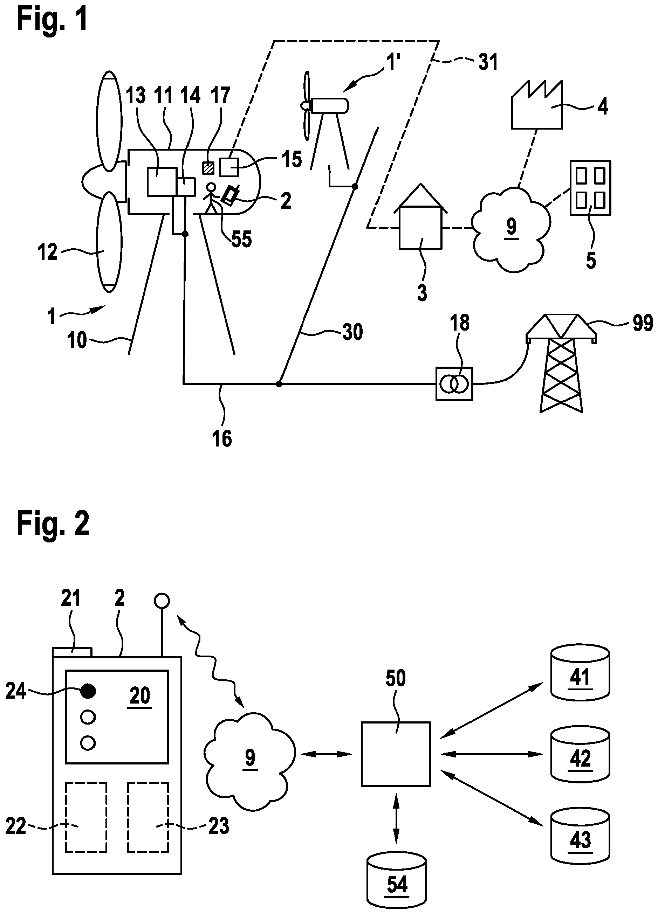

- Fig. 1: eine schematische Ansicht eines Windparks mit mehreren Windenergieanlagen;
- Fig. 2: ein Blockdiagramm zu einem Fehlerbehandlungssystem zur Ausführung des erfindungsgemäßen Verfahrens; und
- Fig. 3: ein Ablaufdiagramm mit Verfahrensschritten gemäß dem erfindungsgemäße Verfahren.

Die Erfindung wird nachfolgend erläutert anhand eines Beispiels einer Windenergieanlage, die in einem Windpark steht. Die Erfindung ist aber nicht darauf beschränkt; sie umfasst ebenfalls einzelne oder in Gruppen stehende Windenergieanlagen, kann sich ggf. aber auch auf deren Produktion, Lagerung, Verschiffung (Hafen), Transport und/oder deren Bauphase/Errichtung beziehen, da überall dort "non-conformities" auftreten können.

Eine Windenergieanlage, die in ihrer Gesamtheit mit der Bezugsziffer 1 bezeichnet ist, umfasst einen Turm 10, an dessen oberem Ende eine Gondel 11 in Azimutrichtung schwenkbeweglich angeordnet ist. An ihrer einen Stirnseite ist ein Windrotor 12 drehbar angeordnet, der über eine nicht dargestellte Rotorwelle einen Generator 13 antreibt, der mit einem Umrichter 14 zusammenwirkt zur Erzeugung elektrischer Leistung. Ferner in der Gondel 11 angeordnet ist eine Betriebssteuerung 15, welche den eigentlichen Betrieb der Windenergieanlage 1 überwacht und steuert.

Die erzeugte elektrische Leistung gibt die Windenergieanlage 1 über eine Anschlussleitung 16 an ein parkinternes Sammelnetz 30 ab. Von dort wird es über einen Kopplungspunkt in ein Übertragungsnetz 99 eingespeist. Die Steuerung 15 ist über ein parkinternes Signalnetz 31 mit einem Parkmaster 3 verbunden.

Der Windpark, in dem die Windenergieanlage 1 angeordnet ist, umfasst weitere Windenergieanlagen 1', die im Wesentlichen gleichartig aufgebaut sind. Sie sind ebenfalls angeschlossen an das parkinterne Sammelnetz 30 zur Abgabe der von ihnen erzeugten elektrischen Leistung und an das parkinterne Signalnetz 31 zur Steuerung.

Der Parkmaster 3 ist über ein Datennetz (Internet 9) verbunden mit verschiedenen Institutionen, darunter eine Leitstelle (nicht dargestellt) für das Übertragungsnetzes 99, einem Hersteller 4 der Windenergieanlagen sowie einem Wartungsdienstleister 5.

Zu dem Wartungsdienstleister 5 gehört ein Techniker 55, der zur Behebung von Fehlern oder Störungen von dem Wartungsdienstleister 5 an die betroffene Windenergieanlage 1 geschickt wird. Dieser ist ausgerüstet mit einem Smartphone 2 (oder Tablet bzw. Laptop), welches über eine drahtlose Anbindung an das Internet 9 verfügt und darüber mit der Wartungszentrale 5 verbunden ist. Die Wartungszentrale 5 stellt ein Wartungsportal 50 bereit, auf das über das Internet 9 mittels des Smartphone 2 zugegriffen werden kann. Vorzugsweise ist ferner eine Offline-Funktionalität implementiert, wobei der Nutzer bereits im Vorfeld die Daten der Windenergieanlagen 1, 1' herunterlädt und diese synchronisiert, ggf. zu einem späteren Zeitpunkt. Damit kann volle Offline-Funktionalität erreicht werden, was insbesondere für abgelegene Windenergieanlagen einen erheblichen Vorteil darstellt.

Das Wartungsportal 50 ist seinerseits verbunden über hier nicht näher zu erläuternden Datenverbindungen mit einem zentralen Datenbanksystem, das mehrere Datenbanken 41, 42 umfasst in denen der Ausrüstungsstand der Windenergieanlage 1 bzw. mögliche Fehler und korrespondierende Fehlerbilder gespeichert sind. Diese Datenbanken sind häufig bei dem Hersteller 4 angeordnet, jedoch ist das nicht zwingend.

Bei der Datenbank 41 kann es sich insbesondere um eine Ausrüstungsliste handeln, welche für jede Windenergieanlage die Identität und die darin verbauten Komponenten verzeichnet. An der Ausrüstungsliste hängen somit das Material und die eigentliche Produktstruktur. Diese wiederum enthält Information darüber, was in der jeweiligen Windenergieanlage 1 verbaut ist, von welchem Lieferanten, wann das Material verbaut bzw. im System erfasst wurde und welcher Ausrüstungsstand vorliegt. Eine derartige Datenbank an sich ist Standard (zum Beispiel als sogenannte SAP MM) und braucht daher hinsichtlich Aufbau und Struktur nicht näher erläutert zu werden.

Bei der Datenbank 42 sind verschiedene Fehler und zugeordnete Fehlerbilder hinterlegt, wobei die Fehlerbilder insbesondere aus eingespeicherten Meldungen zu den einzelnen Fehlern gebildet sind. Diese Fehler und Fehlerbilder sind wiederum verknüpft mit den einzelnen Komponenten, wie sie in der Datenbank 41 eingespeichert sind. Auch eine derartige Datenbank ist an sich bekannt (zum Beispiel als sogenannte SAP QM) und braucht daher bezüglich ihres Aufbaus und ihrer Struktur vorliegend nicht näher erläutert zu werden.

Ferner ist eine Datenbank 43 vorgesehen, welche Multimedia-Daten zu verschiedenen Fehlern und Fehlerbildern enthält. Hierbei kann es sich um Bilder, Fotografien, Video-und/oder Audiosequenzen handeln, die vor allem dem Techniker 55 bei der Identifikation und Erfassung (ggf. optional auch Behebung) eines Fehlers Unterstützung bieten.

Ferner kann eine Datenbank 54 vorgesehen sein, in welcher Wartungsberichte eingespeichert werden. Sie bildet somit eine Wartungshistorie für die jeweiligen Windenergieanlagen 1 ab. Diese Datenbank kann häufig bei dem Wartungsdienstleister 5 vorgesehen sein. Zwingend ist dies aber nicht, sie kann auch woanders angeordnet seien. Ferner braucht sie nicht zwingend als gesonderte Datenbank ausgeführt zu sein, sondern kann ggf. auch mit einer der übrigen Datenbanken kombiniert sein, beispielsweise der Datenbank 41 oder 42.

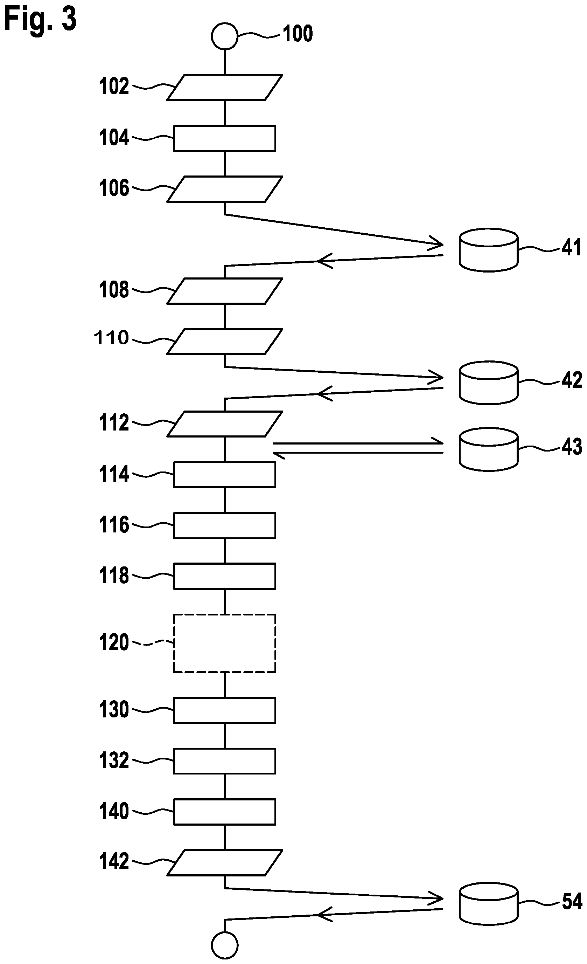

Der Ablauf des erfindungsgemäßen Verfahrens wird nachfolgend unter Bezugnahme auf das Ablaufdiagramm in Figur 3 beschrieben. Ausgehend von einem Startpunkt 100 wird zunächst ein aufgetretener Fehler an einer betroffenen Windenergieanlage 1 bzw. einer ihrer Komponenten (ggf. auch schon bei bzw. vor Errichtung der Windenergieanlage 1) erfasst, und zwar von dem Techniker 55 mittels des Smartphones 2 (Schritt 102). Auf dem Smartphone 2 läuft eine spezielle App, deren Wirkungsweise nachfolgend erläutert wird. Es erfolgt ein Identifizieren der Windenergieanlage bzw. der Komponente (Schritt 104). Beispielsweise kann der Techniker 55 hierzu eine Kamera 21 des Smartphones 2 zum Abtasten eines QR-Codes 17 der Windenergieanlage 1 verwenden. Es wird dann von der App gesteuert eine Datenverbindung von dem Smartphone 2 zu dem Wartungsportal 50 aufgebaut und über dieses auf die Datenbank 41 zugegriffen (Schritt 106). Aus der Datenbanken 41 werden die zu der betroffenen Windenergieanlage 1 bzw. der Komponente gespeicherten Informationen in Bezug auf die verbauten Komponenten und deren Ausrüstungsstand ausgelesen, sodass dem Techniker nunmehr diese Informationen ohne weiteres manuelles Zutun vorliegen (Schritt 108).

Weiter ist vorgesehen, dass mittels der auf dem Smartphone 2 laufenden App eine Verbindung zu der Datenbank 42 aufgebaut wird (Schritt 110), um so Zugang zu den auf der Datenbank 42 gespeicherten Maßnahmen zu erhalten. Es werden dort geeignete Maßnahmen zur Fehleridentifikation und zur Fehlerbehebung bei der identifizierten Windenergieanlage und ihren Komponenten ausgewählt und abgerufen (Schritte 112 und 114), wobei hierbei insbesondere auch auf die Multimedia-Datenbank 43 zugegriffen werden kann, um deren Inhalte mittels der App auf dem Smartphone 2 abzuspielen bzw. Multimediadaten von der identifizierten Windenergieanlage abzuspeichern. Basierend darauf erfolgt dann nachfolgend die Diagnose (Schritt 116) und der Techniker 55 wählt ggf. geeignete Maßnahmen aus, insbesondere Sofortmaßnahmen (Schritt 118).

Hat das Vorgehen bis zu diesem Punkt ergeben, dass ein komplexer Fehler an der Windenergieanlage 1 vorliegt, der nicht ohne weiteres behoben werden kann, so kann hieran optional ein Workflow zur weiteren Bearbeitung des Fehlers anschließen. Das Abarbeiten dieses Workflows erfolgt in Schritt 120. Dazu umfasst die App auf dem Smartphone 2 ein Workflowmodul 23.

Anschließend werden mittels der auf dem Smartphone 2 laufenden App die Ergebnisse erfasst und an das Datenbanksystem übermittelt (Schritt 130). Der Bearbeitungszustand des Fehlers wird aktualisiert (Schritt 132) und auf einer Anzeige 20 des Smartphones 2 angezeigt als Indikator 24. Damit wird erfasst, welche Anforderungen von wem (beispielsweise Techniker 55) gestellt wurden, wie der jeweilige Bearbeitungsstatus ist und welche Fehler bzw. Störungen an der betroffenen Windenergieanlage bereits vorhanden sind bzw. geklärt sind.

Mittels dieser Informationen kann nachfolgend ein Report, insbesondere ein Fehlerreport, weitgehend automatisiert erstellt werden. Anstatt wie bisher eine Vielzahl von Daten zu der Windenergieanlage manuell einzutragen, erfolgt nun eine weitgehend automatisierte Generierung des Fehlerreports mittels der auf dem Smartphone 2 laufenden App (Schritt 140), und zwar mittels eines Berichterstellungsmoduls 22. Hierbei werden die abgefragten Daten zur Windenergieanlage einschließlich ihrer Komponenten, dem Ausrüstungsstand, Fehler und Fehlerbilder sowie getroffene Maßnahmen und deren Ergebnis automatisiert in den Report übernommen. Der Techniker 55 wird damit dank der auf dem Smartphone 2 laufenden App und der von ihr initiierten und kontrollierten Verbindung des Smartphones 2 über das Wartungsportal 50 mit dem Datenbanksystem von dieser einerseits mühseligen, andererseits aber auch fehleranfälligen Arbeit wirksam entlastet. Schließlich führt die App auf dem Smartphone 2 ein Speichern des Reports über das Wartungsportal 50 auf der Datenbank 54 aus, um so die Wartungshistorie der betroffenen Windenergieanlage 1 zu aktualisieren (Schritt 142). Die Datenbank 54 braucht nicht zwingend gesondert ausgeführt zu sein, sondern kann auch in das zentrale Datenbanksystem integriert sein.

## Patentansprüche

1. Verfahren zum Steuern von Fehlerbehebungen an Windenergieanlagen (1, 1'), die jeweils einen von einem Windrotor (12) angetriebenen Generator (13) zur Erzeugung elektrischer Leistung sowie eine Betriebssteuerung (15) aufweisen, unter Verwendung eines mobilen Endgeräts (2) zum Einsatz an einer von einem Fehler betroffenen Windenergieanlage (1), mit den Schritten:
- Erfassen (102) eines Fehlers an der Windenergieanlage (1) durch einen Nutzer mittels des mobilen Endgeräts,
- Identifizieren (104) der Windenergieanlage (1) und/oder ihrer Komponente,
- Aufbauen (106) einer Verbindung zu einem entfernten zentralen Datenbanksystem (41, 42, 43, 54), in dem Angaben zur Identifikation der Windenergieanlage, Komponenten und Ausrüstungsstand der Windenergieanlage enthalten sind,
- Abfragen (108) von Komponenten und/oder Ausrüstungsstand-Daten in Bezug auf die fehlerbehaftete Windenergieanlage von dem zentralen Datenbanksystem (41, 42, 43, 54) und Übermitteln dieser an das mobile Endgerät (2),
- Generieren (140) eines Fehlerreports, wobei in den Report automatisiert die abgefragten Daten zur Identifikation sowie Komponenten und/oder Ausrüstungsstand aufgenommen sind, und
- Automatisiertes Ermitteln von Maßnahmen zur Behebung des Fehlers, umfassend:
- Aufbauen (110) einer Verbindung zu dem entfernten zentralen Datenbanksystem (41, 42, 43, 54), in dem Angaben zu Maßnahmen bei Fehlern gespeichert sind,
- automatisiertes Auswählen (112) der Maßnahmen, die in diesem Datenbanksystem (41, 42, 43, 54) gespeichert sind in Bezug auf die identifizierte Windenergieanlage und/oder ihre Komponenten, und
- Übermitteln (114) mindestens einer der Maßnahmen an das mobile Endgerät (2).

2. Verfahren nach Anspruch 1, **dadurch gekennzeichnet, dass** als mobiles Endgerät (2) ein Smartphone oder ein Tabletcomputer verwendet wird, wobei vorzugsweise das Aufbauen der Verbindung zum entfernten Datenbanksystem (41, 42, 43, 54), das Abfragen von Komponenten und/oder Ausrüstungsstand und das Generieren des Fehlerreports mittels einer App automatisiert sind.

3. Verfahren nach einem der vorangehenden Ansprüche, **dadurch gekennzeichnet, dass** das Übermitteln der mindestens einen Maßnahme das Übermitteln von Multimediainhalten umfasst, insbesondere Bilder, Fehlerbilder und/oder akustische Signaturen, und zwar abgestimmt auf die die identifizierte Windenergieanlage und/oder ihre Komponenten, und deren Wiedergabe auf dem mobilen Endgerät (2).

4. Verfahren nach Anspruch 3, dass das Übermitteln der mindestens einen Maßnahme ferner umfasst das Übermitteln (116) von Diagnoseschritten und/oder Sofortmaßnahmen.

5. Verfahren nach einem der vorangehenden Ansprüche **dadurch gekennzeichnet, dass** mehrere Maßnahmen übermittelt werden, und ein Nutzer am mobilen Endgerät eine auswählt, und diese Auswahl (118) an das zentrale Datenbanksystem (41, 42, 43, 54) übermittelt und dort zu der jeweiligen Windenergieanlage gespeichert wird.

6. Verfahren nach einem der vorangehenden Ansprüche, **dadurch gekennzeichnet, dass** bei dem Generieren (140) des Fehlerreports auch eine Angabe der mindestens einen Maßnahme automatisiert aufgenommen wird.

7. Verfahren nach einem der vorangehenden Ansprüche, **gekennzeichnet durch** Anwenden der Maßnahme bei der Windenergieanlage, Erfassen und Übermitteln (130) des Ergebnisses mittels des mobilen Endgeräts (2).

8. Verfahren nach einem der vorangehenden Ansprüche, **dadurch gekennzeichnet, dass** das Übermitteln der Daten von dem zentralen Datenbanksystem (41, 42, 43, 54) an das mobile Endgerät (2) fliegend erfolgt.

9. Verfahren nach einem der Ansprüche 1 bis 7, **dadurch gekennzeichnet, dass** das Aufbauen der Verbindung zu dem entfernten zentralen Datenbanksystem (41, 42, 43, 54) zu einem anderen Zeitpunkt erfolgt und eine Synchronisierung der Daten auf dem Endgerät (2) und dem zentralen Datenbanksystem (41, 42, 43, 54) umfasst, wobei vorzugsweise eine Offline-Funktion bereitgestellt wird.

10. Verfahren nach einem der vorangehenden Ansprüche, **gekennzeichnet durch** automatisiertes Abspeichern (142) des Fehlerreports in dem zentralen Datenbanksystem (41, 42, 43, 54) und/oder durch automatisiertes Bilden und Aktualisieren eines Bearbeitungszustands (132) des Fehlers.

11. Verfahren nach Anspruch 10, **gekennzeichnet durch** automatisiertes Anzeigen des Bearbeitungszustands an dem mobilen Endgerät (2), vorzugsweise einschließlich Anzeigen von Indikatoren für die Identität des Nutzers, der den Fehler zuerst übermittelt hat, welche Maßnahmen bereits erfolgt sind und/oder welche weiteren Fehler zu der identifizierten Windenergieanlage gespeichert sind.

12. Verfahren nach einem der vorangehenden Ansprüche, **dadurch gekennzeichnet, dass** es ferner umfasst ein automatisiertes Ausführen eines vorzugsweise vordefinierten Workflows (120) zur Behebung des Fehlers.

13. Computerprogrammprodukt umfassend Befehle, die bei der Ausführung des Programms durch einen Computer diesen veranlassen, das Verfahren nach Anspruch 1 auszuführen.

14. Fehlerbehandlungssystem für Windenergieanlagen, die jeweils einen von einem Windrotor (12) angetriebenen Generator (13) zur Erzeugung elektrischer Leistung sowie eine Betriebssteuerung (15) aufweisen, umfassend
- ein mobiles Endgerät (2) zum Einsatz an einer Windenergieanlage (1), die von einem Fehler betroffen ist,
- ein zentrales Datenbanksystem (41, 42, 43, 54), in dem Angaben zur Identifikation, Komponenten und Ausrüstungsstand der Windenergieanlagen enthalten sind,
**dadurch gekennzeichnet, dass**
ein Wartungsportal (50) vorgesehen ist, welches das mobile Endgerät (2) mit dem zentralen Datenbanksystem (41, 42, 43, 54) verknüpft, das mobile Endgerät (2) ein Berichterstellungsmodul (22) aufweist, das dazu ausgebildet ist, vom Nutzer (55) eingegebene Daten zu einem Fehler automatisiert zu verknüpfen mit Daten zur Identifikation sowie Komponenten und/oder Ausrüstungsstand der betroffenen Windenergieanlage (1), und den so erstellten Bericht an das Wartungsportal (50) übermittelt, wobei das Wartungsportal (50) dazu ausgebildet ist, den erstellten Bericht in einem zentralen Datenbanksystem (41, 42, 43, 54) zu der betroffenen Windenergieanlage einzuspeichern, und wobei das Fehlerbehandlungssystem ausgebildet ist zum automatisierten Ermitteln von Maßnahmen zur Behebung des Fehlers, wobei eine Verbindung zu dem entfernten zentralen Datenbanksystem (41, 42, 43, 54) aufgebaut wird, in dem Angaben zu Maßnahmen bei Fehlern gespeichert sind, wobei die Maßnahmen, die in diesem Datenbanksystem (41, 42, 43, 54) gespeichert sind in Bezug auf die identifizierte Windenergieanlage und/oder ihre Komponenten austomatisiert ausgewählt werden, und wobei mindestens eine der Maßnahmen an das mobile Endgerät (2) übermittelt wird.

15. Fehlerbehandlungssystem nach Anspruch 14, **dadurch gekennzeichnet, dass** es zur Ausführung des Verfahrens nach einem der vorangehenden Ansprüche 2 bis 13 ausgebildet ist.

## Claims

1. Method for controlling fault corrections on wind energy installations (1, 1') which each have a generator (13), driven by a wind rotor (12), for generating electrical power and an operational controller (15), using a mobile terminal (2) for use on a wind energy installation (1) affected by a fault, comprising the steps of:
- detection (102) of a fault on the wind energy installation (1) by a user by means of the mobile terminal,
- identifying (104) the wind energy installation (1) and/or its component,
- setting up (106) a connection to a remote central database system (41, 42, 43, 54) which contains information for identifying the wind energy installation, components and equipment status of the wind energy installation,
- retrieving (108) components and/or equipment status data with respect to the faulty wind energy installation from the central database system (41, 42, 43, 54) and transmitting this data to the mobile terminal (2),
- generating (140) a fault report, wherein the retrieved identification data and components and/or equipment status are automatically included in the report, and
- automatically ascertaining measures for correcting the fault, comprising:
- setting up (110) a connection to the remote central database system (41, 42, 43, 54) in which information relating to measures in the event of faults is stored,
- automatically selecting (112) the measures which are stored in this database system (41, 42, 43, 54) with respect to the identified wind energy installation and/or its components, and
- transmitting (114) at least one of the measures to the mobile terminal (2).

2. Method according to Claim 1, **characterized in that** the mobile terminal (2) used is a smartphone or a tablet computer, wherein the setting up of the connection to the remote database system (41, 42, 43, 54), the retrieving of components and/or equipment status and the generating of the fault report are preferably automated by means of an app.

3. Method according to either of the preceding claims, **characterized in that** the transmitting of the at least one measure comprises the transmitting of multimedia contents, in particular images, fault images and/or acoustic signatures, namely matched to the identified wind energy installation and/or its components, and the reproduction thereof on the mobile terminal (2).

4. Method according to Claim 3, **characterized in that** the transmitting of the at least one measure further comprises the transmitting (116) of diagnosis steps and/or emergency measures.

5. Method according to one of the preceding claims, **characterized in that** a plurality of measures are transmitted, and a user selects one on the mobile terminal, and this selection (118) is transmitted to the central database system (41, 42, 43, 54) and stored there in relation to the respective wind energy installation.

6. Method according to one of the preceding claims, **characterized in that**, during the generating (140) of the fault report, information relating to the at least one measure is also automatically included.

7. Method according to one of the preceding claims, **characterized by** applying the measure to the wind energy installation, detecting and transmitting (130) the result by means of the mobile terminal (2).

8. Method according to one of the preceding claims, **characterized in that** the transmitting of the data from the central database system (41, 42, 43, 54) to the mobile terminal (2) is performed on the fly.

9. Method according to one of Claims 1 to 7, **characterized in that** the setting up of the connection to the remote central database system (41, 42, 43, 54) takes place at another point in time and comprises synchronization of the data to the terminal (2) and to the central database system (41, 42, 43, 54), wherein an offline function is preferably provided.

10. Method according to one of the preceding claims, **characterized by** automatic saving (142) of the fault report in the central database system (41, 42, 43, 54) and/or by automatic forming and updating of a processing state (132) of the fault.

11. Method according to Claim 10, **characterized by** automatic displaying of the processing state on the mobile terminal (2), preferably including displaying of indicators for the identity of the user who first submitted the fault, which measures have already been carried out and/or which further faults in relation to the identified wind energy installation are stored.

12. Method according to one of the preceding claims, **characterized in that** it further comprises automatically executing a preferably predefined workflow (120) for correcting the fault.

13. Computer program product comprising commands which, when the program is executed by a computer, cause the latter to carry out the method according to Claim 1.

14. Fault handling system for wind energy installations which each have a generator (13), driven by a wind rotor (12), for generating electrical power and an operational controller (15), comprising
- a mobile terminal (2) for use on a wind energy installation (1) which is affected by a fault,
- a central database system (41, 42, 43, 54) which contains identification information, components and equipment status of the wind energy installations,
**characterized in that**
there is provision for a maintenance portal (50) which links the mobile terminal (2) to the central database system (41, 42, 43, 54), the mobile terminal (2) has a report-generating module (22) which is designed to automatically link data entered by the user (55) relating to a fault to identification data and components and/or equipment status of the affected wind energy installation (1), and transmits the report thus generated to the maintenance portal (50), wherein the maintenance portal (50) is designed to store the generated report in a central database system (41, 42, 43, 54) in relation to the affected wind energy installation, and wherein the fault handling system is designed to automatically ascertain measures for correcting the fault, wherein a connection is set up to the remote central database system (41, 42, 43, 54) in which information relating to measures in the event of faults is stored, wherein the measures which are stored in this database system (41, 42, 43, 54) with respect to the identified wind energy installation and/or its components are automatically selected, and wherein at least one of the measures is transmitted to the mobile terminal (2).

15. Fault handling system according to Claim 14, **characterized in that** it is designed to carry out the method according to one of preceding Claims 2 to 13.

## Revendications

1. Procédé permettant de commander des dépannages sur des éoliennes (1, 1') qui présentent respectivement un générateur (13) entraîné par un rotor éolien (12) pour générer de la puissance électrique, ainsi qu'une commande de fonctionnement (15), en utilisant un terminal mobile (2) à mettre en œuvre sur une éolienne (1) subissant un défaut, comprenant les étapes consistant à :
- détecter (102) un défaut au niveau de l'éolienne (1) par un utilisateur au moyen du terminal mobile,
- identifier (104) l'éolienne (1) et/ou ses composants,
- établir (106) une communication avec un système de base de données central éloigné (41, 42, 43, 54) qui contient des indications permettant d'identifier l'éolienne, les composants et le niveau d'équipement de l'éolienne,
- consulter (108) des données de composants et/ou de niveau d'équipement par rapport à l'éolienne défectueuse à partir du système de base de données central (41, 42, 43, 54) et transmettre celles-ci au terminal mobile (2),
- générer (140) un rapport de défaut, dans lequel les données consultées concernant l'identification, les composants et/ou le niveau d'équipement sont incorporées de manière automatisée dans le rapport, et
- déterminer de manière automatisée des mesures pour éliminer le défaut, comprenant :
- établir (110) une communication avec le système de base de données central éloigné (41, 42, 43, 54) dans lequel sont stockées des indications concernant des mesures en cas de défaut,
- sélectionner (112) de manière automatisée les mesures qui sont stockées dans ce système de base de données (41, 42, 43, 54) par rapport à l'éolienne identifiée et/ou à ses composants, et
- transmettre (114) au moins l'une des mesures au terminal mobile (2).

2. Procédé selon la revendication 1, **caractérisé en ce qu'**un smartphone ou une tablette est utilisé(e) en tant que terminal mobile (2), dans lequel de préférence l'établissement de la communication avec le système de base de données éloigné (41, 42, 43, 54), la consultation des composants et/ou du niveau d'équipement et la génération du rapport de défaut sont automatisés au moyen d'une application.

3. Procédé selon l'une quelconque des revendications précédentes, **caractérisé en ce que** la transmission de ladite au moins une mesure comprend la transmission de contenu multimédia, en particulier d'images, d'images de défaut et/ou de signatures acoustiques, notamment de manière adaptée à l'éolienne identifiée et/ou à ses composants, et la reproduction de ces éléments sur le terminal mobile (2).

4. Procédé selon la revendication 3, **caractérisé en ce que** la transmission de ladite au moins une mesure comprend en outre la transmission (116) d'étapes de diagnostics et/ou de mesures immédiates.

5. Procédé selon l'une quelconque des revendications précédentes, **caractérisé en ce que** plusieurs mesures sont transmises, et un utilisateur en sélectionne une sur le terminal mobile, et transmet cette sélection (118) au système de base de données central (41, 42, 43, 54) et elle y est stockée pour l'éolienne respective.

6. Procédé selon l'une quelconque des revendications précédentes, **caractérisé en ce que** lors de la génération (140) du rapport de défaut, une indication de ladite au moins une mesure est également incorporée de manière automatisée.

7. Procédé selon l'une quelconque des revendications précédentes, **caractérisé par** l'application de la mesure à l'éolienne, la détection et la transmission (130) du résultat au moyen du terminal mobile (2).

8. Procédé selon l'une quelconque des revendications précédentes, **caractérisé en ce que** la transmission des données du système de base de données central (41, 42, 43, 54) au terminal mobile (2) est effectuée à la volée.

9. Procédé selon l'une quelconque des revendications 1 à 7, **caractérisé en ce que** l'établissement de la communication avec le système de base de données central éloigné (41, 42, 43, 54) a lieu à un autre instant et comprend une synchronisation des données sur le terminal (2) et le système de base de données central (41, 42, 43, 54), dans lequel de préférence une fonction hors ligne est fournie.

10. Procédé selon l'une quelconque des revendications précédentes, **caractérisé par** le stockage automatisé (142) du rapport de défaut dans le système de base de données central (41, 42, 43, 54) et/ou par la constitution et la mise à jour automatisées d'un état de traitement (132) du défaut.

11. Procédé selon la revendication 10, **caractérisé par** un affichage automatisé de l'état de traitement sur le terminal mobile (2), de préférence y compris l'affichage d'indicateurs pour l'identité de l'utilisateur qui a transmis le défaut en premier, les mesures déjà prises et/ou les autres défauts stockés pour l'éolienne identifiée.

12. Procédé selon l'une quelconque des revendications précédentes, **caractérisé en ce qu'**il comprend en outre une exécution automatisée d'un flux de travail (120), de préférence prédéfini, pour éliminer le défaut.

13. Produit de programme informatique, comprenant des instructions qui, lors de l'exécution du programme par un ordinateur, font que celui-ci exécute le procédé selon la revendication 1.

14. Système de traitement de défaut pour des éoliennes qui présentent respectivement un générateur (13) entraîné par un rotor éolien (12) pour générer de la puissance électrique, ainsi qu'une commande de fonctionnement (15), comprenant
- un terminal mobile (2) à mettre en œuvre sur une éolienne (1) subissant un défaut,
- un système de base de données central (41, 42, 43, 54) qui contient des indications concernant l'identification, les composants et le niveau d'équipement des éoliennes,
**caractérisé en ce qu'**un portail de maintenance (50) est prévu qui relie le terminal mobile (2) au système de base de données central (41, 42, 43, 54), le terminal mobile (2) présente un module de rédaction de rapport (22) qui est réalisé pour relier de manière automatisée des données entrées par l'utilisateur (55) concernant un défaut à des données pour l'identification, les composants et/ou le niveau d'équipement de l'éolienne (1) en question et pour transmettre au portail de maintenance (50) le rapport ainsi rédigé, dans lequel le portail de maintenance (50) est réalisé pour enregistrer le rapport rédigé dans le système de base de données central (41, 42, 43, 54) pour l'éolienne en question, et dans lequel le système de traitement de défaut est réalisé pour déterminer de manière automatisée des mesures pour éliminer le défaut, dans lequel une communication avec le système de base de données central éloigné (41, 42, 43, 54) est établie dans lequel sont stockées des indications concernant des mesures en cas de défaut, dans lequel les mesures qui sont stockées dans ce système de base de données (41, 42, 43, 54) sont sélectionnées de manière automatisée par rapport à l'éolienne identifiée et/ou à ses composants, et dans lequel au moins l'une des mesures est transmise au terminal mobile (2).

15. Système de traitement de défaut selon la revendication 14, **caractérisé en ce qu'**il est réalisé pour exécuter le procédé selon l'une quelconque des revendications précédentes 2 à 13.
